# FASCICULE DE BREVET EUROPEEN

(11) **EP 1 037 051 B1**
(45) Date de publication et mention de la délivrance du brevet: **29.12.2004**
(21) Numéro de dépôt: 00400536.9
(22) Date de dépôt: 29.02.2000
(51) Int. Cl.: G01P 3/44

(54) **Palier à roulement instrumenté**
Instrumentiertes Wälzlager
Instrumented roller bearing

(30) Priorité: 17.03.1999 FR 9903336
(43) Date de publication de la demande: 20.09.2000
(73) Titulaire: SKF FRANCE, F-92140 Clamart (FR)
(72) Inventeur: Girardin, Carole, 37300 Joue-les-Tours (FR); Message, Olivier, 37000 Tours (FR)
(74) Mandataire: Casalonga, Axel

(56) Documents cités:
- EP-A- 0 665 436
- US-A- 4 915 512
- US-A- 5 564 839

## Description

La présente invention concerne le domaine des paliers à roulement instrumentés munis d'un ensemble de détection des paramètres de rotation tels que la position angulaire, le sens de rotation, la vitesse, l'accélération.

De tels roulements instrumentés et de tels montages sont bien connus, notamment par le document FR-A-2 754 903. Ces roulements instrumentés peuvent être utilisés, par exemple, pour le pilotage de moteurs électriques de type synchrone.

L'ensemble de détection constitué par un bloc capteur et un élément codeur fournit alors au système d'asservissement du moteur toutes les informations utiles, en particulier la vitesse de rotation et la position des pôles du rotor par rapport à ceux du stator.

Dans ce type de roulement instrumenté, le capteur est disposé dans un bloc solidaire de la bague non tournante du roulement, tandis qu'un élément codeur est disposé sur la bague tournante du roulement ou sur une partie tournante du montage et défile à rotation devant la partie sensible du capteur afin de générer, en coopération avec ce dernier, un signal représentatif de la rotation de l'élément tournant. L'ensemble capteur-codeur peut être, par exemple, de type optique ou bien encore magnétique.

Le document FR-A-2 644 857 décrit une butée à roulement équipé d'un capteur de champ magnétique. La butée comprend une première bague radiale en appui sur une cale et une deuxième bague en butée et fixée sur une face d'appui d'un carter. Un émetteur de champ magnétique est monté sur la première bague et un support de capteur est monté sur la deuxième bague. Les bagues comprennent des extensions radiales annulaires portant des chemins de roulement opposés entre lesquels sont disposés des rouleaux Une paire de rebords cylindriques séparés circonférentiellement s'étendent axialement à la périphérie de. l'extension radiale annulaire de la deuxième bague et coiffe la face d'appui du carter Le rebord axial de la partie annulaire de la deuxième bague permet de positionner le capteur radialement à l'extérieur du chemin de roulement réduisant ainsi au minimum la longueur axiale du roulement de butée.

Dans les moteurs synchrones, l'arbre du rotor est monté à rotation dans un carter abritant le stator par l'intermédiaire d'au moins deux paliers à roulement dont l'un est immobilisé axialement par rapport au carter par l'intermédiaire de sa bague extérieure, tandis que la bague extérieure de l'autre roulement peut se déplacer axialement sur une distance limitée par rapport audit carter.

Le montage comporte généralement des rondelles élastiques appliquant sur la bague extérieure du roulement axialement libre une charge axiale permettant aux deux roulements de fonctionner sans jeu et avec un certain angle de contact oblique par rapport à l'axe de rotation du roulement grâce à la précontrainte axiale appliquée.

Dans les montages de l'art antérieur on utilise des systèmes de détection séparés des roulements, ce qui relativement encombrant ou onéreux, ou bien on utilise un roulement instrumenté disposé du côté où le roulement est axialement fixe par rapport au carter. Or, certaines contraintes, notamment d'encombrement, de géométrie des pièces environnantes, de risques de pollution, etc., ne permettent pas toujours d'implanter aisément un roulement instrumenté du côté où le roulement est axialement fixe dans le carter.

Il existe donc des applications techniques, moteurs électriques ou autres, dans lesquelles il serait intéressant de pouvoir implanter un roulement instrumenté apte à pouvoir subir un déplacement axial limité dans son logement. La structure des roulements instrumentés de l'art antérieur ne leur permet pas de s'adapter à un montage avec liberté de déplacement axial de la bague extérieure du roulement dans son logement.

Le document US-A-5 S64 839 décrit un roulement pour roue comprenant une bague extérieure et deux demi-bagues intérieures entre lesquelles sont disposées deux rangées de billes La bague extérieure porte une roue codeuse magnétique et, l'une des demi-bagues intérieures porte un capteur. Un doigt s'étend axialement dans un trou formé dans ladite demi-bague et dans un trou formé dans un support pour solidariser angulairement ces deux éléments. Les deux demi-bagues intérieures sont prévues pour être serrées axialement entre le support et un écrou.

L'invention a pour objet de remédier aux inconvénients évoqués ci-dessus et de proposer un palier à roulement instrumenté apte à un léger déplacement axial par rapport à son support non tournant.

Le dispositif de palier à roulement instrumenté, selon l'invention, est du type comprenant une bague extérieure, une bague intérieure, au moins une rangée d'éléments roulants disposés entre un chemin de roulement de la bague extérieure et un chemin de roulement de la bague intérieure, et un ensemble de détection des paramètres de rotation comprenant un bloc capter, non tournant solidaire de la bague intérieure ou de la bague extérieure un organe codeur tournant. Le dispositif comprend des premiers moyens appartenant à l'ensemble de détection et des moyens complémentaires aux premiers moyens adaptés pour être montés sur un support, les premiers moyens et les moyens complémentaires étant adaptés à coopérer entre eux pour à la fois immobiliser angulairement une partie non tournante du dispositif sur le support et autoriser un déplacement axial relatif du dispositif par rapport au support, après montage définitif de la partie non tournante sur ledit support, ladite partie non tournante comprenant au moins une des bagues et le bloc capteur.

Une partie tournante du dispositif. est solidaire d'un arbre.

Avantageusement, le bloc capteur et la bague non tournante sont solidaires.

Le bloc capteur peut comprendre les premiers moyens d'immobilisation angulaire.

. Avantageusement, les moyens d'immobilisation angulaire constituent également des moyens d'indexation angulaire du bloc capteur par rapport au support.

Avantageusement, le bloc capteur comprend au moins une surface extérieure cylindrique sur laquelle sont prévus les premiers moyens d'immobilisation angulaire.

. Dans un mode de réalisation de l'invention, les premiers moyens d'immobilisation angulaire comprennent une protubérance en saillie radiale par rapport à la surface extérieure cylindrique. Les premiers moyens d'immobilisation angulaire peuvent comprendre une encoche formée entre deux protubérances en saillie radiale par rapport à la surface extérieure cylindrique, ladite encoche s'étendant axialement

Les premiers moyens d'immobilisation angulaire peuvent aussi comprendre une protubérance en saillie axiale par rapport au bloc capteur.

Dans un autre mode de réalisation de l'invention, les premiers moyens d'immobilisation angulaire comprennent une rainure formée en creux dans la surface extérieure cylindrique, ladite rainure s'étendant axialement.

L'organe codeur peut être de type optique ou magnétique.

La présente invention a également pour objet l'utilisation d'un dispositif tel que décrit ci dessus. La partie non tournante du dispositif est montée sur le support pourvu des moyens complémentaires aux premiers moyens d'immobilisation angulaire, de façon que la partie non tournante soit solidaire angulairement du support et libre de se déplacer axialement par rapport au dit support après montage définitif de la partie non tournante sur ledit support. Lesdits moyens complémentaires peuvent comprendre un pion axial, un doigt radial ou encore un trou formé dans le support.

Ainsi, l'ensemble formé par le roulement équipé de son bloc capteur possède un degré de liberté axiale dans deux directions opposées par rapport au support fixe dans ou sur lequel il est monté. Le bloc assure également l'immobilisation angulaire de la bague non tournante du roulement par rapport au support fixe

Le dispositif suivant l'invention comprend donc des moyens permettant d'assurer simultanément non seulement pendant le montage mais aussi après montage définitif de la partie non tournante sur son support fixe :
- l'immobilisation angulaire d'une partie non tournante du dispositif par rapport au support fixe;
- l'éventuelle indexation angulaire du bloc capteur par rapport au support fixe;
- la possibilité de déplacement axial dudit dispositif par rapport audit support fixe.

Ainsi, dans le cas d'un roulement instrumenté monté dans un moteur synchrone, une indexation angulaire précise du capteur par rapport à un élément du carter dont la position angulaire par rapport au stator est connue, permet, si le codeur est lui-même indexé par rapport à l'arbre et aux pôles du rotor, de connaître la position angulaire du rotor par rapport au stator et donc la position relative des pôles. L'ensemble capteur-codeur peut en outre délivrer les informations relatives à la vitesse et à l'accélération du rotor. La possibilité de déplacement axial du palier à roulement instrumenté est conservée après montage définitif, ce qui permet de s'affranchir d'éventuelles variations dimensionnelles axiales de certains constituants consécutives par exemple à des dilatations thermiques ou à des variations de charge axiale sur les paliers.

Avantageusement, ces moyens d'indexation peuvent aussi servir à positionner la sortie des fils de connexion du bloc capteur à un endroit prédéterminé.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
la figure 1 est une vue en coupe axiale d'un palier à roulement instrumenté selon un premier mode de réalisation de l'invention;
la figure 2 est une vue en perspective du palier à roulement de la figure 1; et
la figure 3 est une vue en coupe axiale d'un palier à roulement instrumenté selon un second mode de réalisation de l'invention.

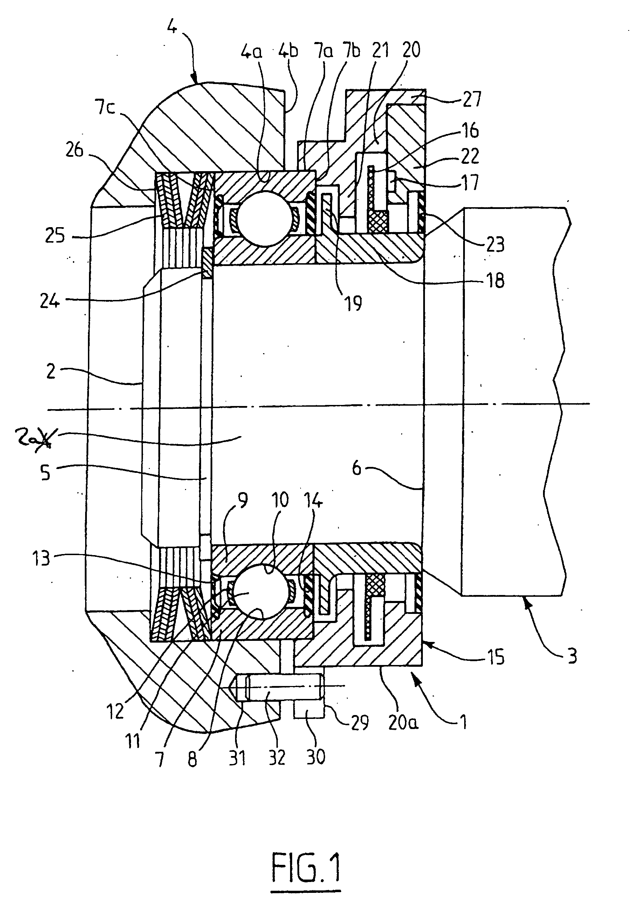

Sur la figure 1, on voit que le palier à roulement instrumenté, référencé 1 dans son ensemble, est monté sur l'extrémité 2 d'un arbre tournant 3 d'un moteur électrique. L'arbre 3 supporte le rotor, non représenté, et est monté au moyen du roulement instrumenté 1 axialement flottant dans un carter fixe 4 supportant le stator, non représenté. L'extrémité 2 de l'arbre 3 comprend une surface cylindrique extérieure 2a limitée du côté de l'extrémité libre par une rainure annulaire 5 à bords radiaux et du côté opposé par une surface radiale 6 s'étendant vers l'extérieur.

Le roulement 1 comprend une bague extérieure 7 pourvue d'un chemin de roulement 8, une bague intérieure 9 pourvue d'un chemin de roulement 10, une rangée d'éléments roulants 11, ici des billes, disposés entre les chemins de roulement 8 et 10, une cage 12 de maintien de l'espacement circonférentiel des éléments roulants 11 et deux joints d'étanchéité 13 et 14 montés de part et d'autres de la rangée d'éléments roulants 11. La bague intérieure 9 est montée sur la surface cylindrique 2a à proximité de la rainure 5. La bague extérieure 7 est montée dans un alésage 4a du carter 4 avec un ajustement du type "glissant-juste".

L'ensemble de détection associé au roulement 1 porte la référence 15 et se compose d'un codeur 16 et d'un capteur 17 disposés à proximité l'un de l'autre avec un entrefer axial.

Le codeur 16 se présente sous la forme d'une roue comportant des graduations optiques défilant devant le capteur 17 et est supporté par un élément annulaire 18 en contact avec la surface cylindrique 2a et axialement disposé entre la bague intérieure 9 et la surface radiale 6 de l'arbre 3. Le codeur 16 est monté sensiblement au milieu de l'élément 18, dans le sens axial. L'élément 18 qui est de forme générale cylindrique comprend une collerette radiale 19 s'étendant vers l'extérieur à proximité du joint d'étanchéité 14 du roulement. La collerette 19 se prolonge jusqu'au niveau de la bague extérieure 7.

Le capteur 17 est supporté par un bloc capteur 20 solidarisé de façon rigide à la bague extérieure 7. Le bloc capteur 20 vient en contact avec une partie de la surface extérieure 7a de la bague extérieure 7 et avec une partie de la surface frontale 7b de la bague extérieure 7 à proximité du joint d'étanchéité 14. La fixation du bloc capteur 20 est assurée par un moyen approprié tel qu'emmanchement, collage, soudure, etc.

Le bloc capteur 20 est pourvu d'une collerette radiale 21 qui s'étend radialement vers l'intérieur en direction de l'élément 18 de support du codeur 16. La collerette 21 est disposée axialement entre la collerette 19 de l'élément 18 et le codeur 16. Les collerettes 19 et 21 forment un joint labyrinthe qui empêche la propagation d'éléments polluants tels que la graisse du roulement qui serait nuisible au bon fonctionnement du codeur 16 et du capteur 17.

Les collerettes radiales 19 et 21, respectivement de l'élément 18 et du bloc capteur 20, assurent également le maintien dudit élément 18 par rapport au bloc capteur 20, avant le montage définitif du palier à roulement 1 sur l'arbre 3, et sa fixation axiale.

Le capteur 17 est monté sur un élément de support radial 22 fixé dans le bloc capteur 20, s'étendant vers l'intérieur et axialement entre le codeur 16 et la surface radiale 6 de l'arbre 3, le capteur 17 étant monté face au codeur 16. L'élément de support 22 et le bloc capteur 20 supportent également un joint d'étanchéité 23 qui vient frotter sur la surface cylindrique extérieure de l'élément 18 supportant le codeur 16 à proximité de la surface radiale 6 de l'arbre 3, pour empêcher l'intrusion d'éléments extérieurs à proximité immédiate du codeur 16 et du capteur 17.

Pour la retenue axiale des différents éléments composant le palier à roulement instrumenté 1, un circlips 24 est disposé dans la rainure 5 de l'extrémité 2 de l'arbre 3. Le circlips 24 est en contact avec la bague intérieure 9. L'élément 18 est axialement maintenu entre la bague intérieure 9 et la surface radiale 6 de l'arbre 3. De plus, des rondelles de précontrainte référencées 25 dans leur ensemble, de forme tronconique, sont disposées autour de l'extrémité 2 entre une surface radiale 7c de la bague extérieure 7 du côté opposé au bloc capteur 20 et un épaulement radial 26 du carter 4. Ces rondelles de précontrainte 25 tendent à écarter la bague extérieure 7 de l'épaulement 26. La bague extérieure 7 est montée dans son logement 4a avec un ajustement sans serrage de type glissant-juste ce qui lui donne une possibilité de déplacement axial par rapport au carter.

L'autre roulement, non représenté, étant axialement lié au carter, au moins dans la direction de l'effort exercé par les rondelles de précontrainte, l'action desdites rondelles sur la bague extérieure 7 du premier roulement provoque un léger déplacement axial de ladite bague extérieure et de l'arbre jusqu'au rattrapage complet du jeu axial des deux roulements.

La surface extérieure 20a du bloc capteur 20 est de forme générale cylindrique avec une protubérance radiale 27 à proximité du capteur 17 et permet la sortie des fils électriques 33 issus du capteur 17 et, éventuellement, des moyens d'orientation de ces fils ou des moyens de connexion, non représentés.

La surface extérieure 20a est également pourvue de deux protubérances 28 et 29 séparées circonférentiellement par une encoche 30. Ces protubérances 28 et 29 sont disposées axialement à l'opposé de la surface radiale 6 de l'arbre 3, en regard d'une surface frontale radiale 4b du carter 4. La surface frontale 4b est pourvue d'un trou axial 31 dans lequel est fixé un pion 32 qui fait saillie de la surface frontale 4b et s'engage dans l'encoche 30 entre les protubérances 28 et 29. Le bloc capteur 20 est ainsi couplé angulairement au carter 4 tout en conservant une possibilité de déplacement axial grâce au glissement relatif possible entre le pion axial 32 et l'encoche 30. L'immobilisation angulaire du bloc capteur 20 entraîne celle de la bague extérieure 7 qui elle aussi peut coulisser axialement par rapport à l'alésage 4a du carter 4.

Ainsi, le pion 32 et l'encoche 30 permettent non seulement d'immobiliser angulairement le bloc capteur avec le carter, mais peuvent aussi servir de moyen d'indexation du capteur par rapport à un élément de référence du carter. Si le codeur est lui-même indexé par rapport à un élément de référence du rotor, il est possible de connaître à tout moment la position angulaire de l'élément de référence du rotor par rapport à l'élément de référence du carter et d'en déduire par exemple la position angulaire relative des pôles du rotor par rapport à ceux du stator. L'indexation angulaire sert également à positionner la sortie des fils de connexion du bloc capteur à un endroit prédéterminé.

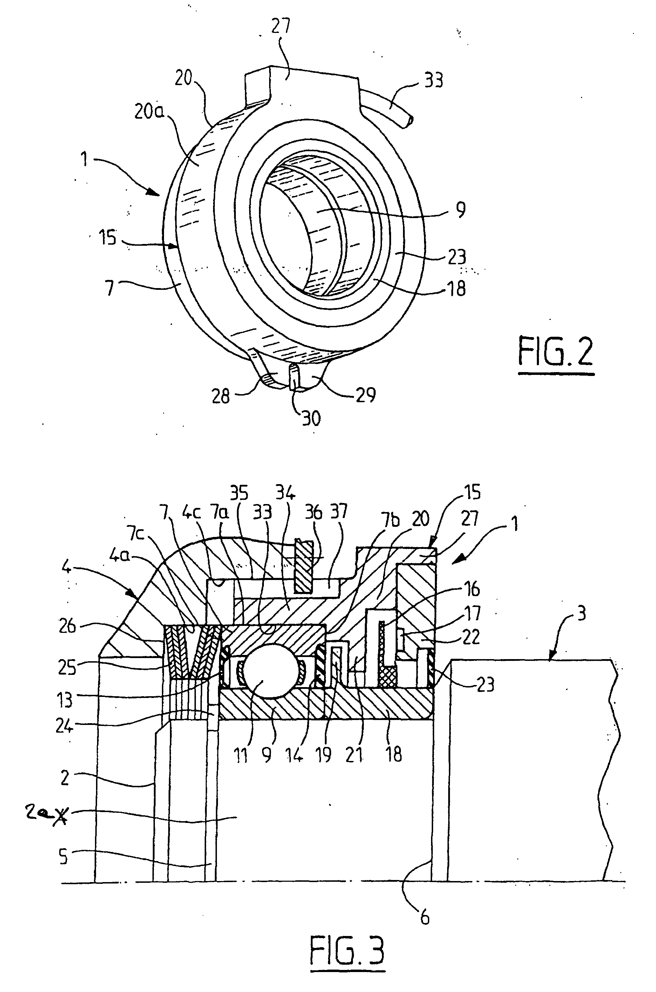

Le mode de réalisation illustré sur la figure 3 diffère de celui illustré sur la figure 1, en ce que la bague extérieure 7 du roulement est entièrement supportée par un alésage 33 d'une prolongation axiale 34 du bloc capteur 20. La prolongation axiale 34 est également pourvue d'une surface extérieure cylindrique 35, laquelle est disposée dans un alésage correspondant 4c du carter 4, l'alésage 4c étant de diamètre supérieur à celui de l'alésage 4a dans lequel sont disposées les rondelles de précontrainte 25. La prolongation axiale 34 forme un manchon entre l'alésage 35 et la surface extérieure 7a.

Un ergot 36 solidaire du carter 4 fait saillie radialement vers l'intérieur et vient coopérer avec une rainure axiale 37 formée dans la surface extérieure cylindrique 35 de la prolongation axiale 34 du bloc capteur 20. Le bloc capteur 20 est ainsi monté avec possibilité de coulissement axial par rapport au carter 4, tout mouvement angulaire étant interdit par la coopération de l'ergot 36 et de la rainure 37. La bague extérieure 7 est solidaire axialement et angulairement du bloc capteur 20. La bague intérieure tournante 9 et l'élément 18 sont solidaires en rotation de l'arbre 3 et sont solidaires axialement de la bague extérieure 7 et du bloc capteur 20. L'ergot 36 et la rainure 37 constituent en outre des moyens d'indexation angulaires du capteur par rapport au support fixe.

On pourrait, bien sûr, à titre de variante, inverser les moyens précités, et munir par exemple le bloc capteur d'un pion axial venant s'engager dans un trou axial aménagé sur le support ou bien encore munir le bloc capteur d'un pion ou d'un doigt radial venant s'engager dans une rainure axiale aménagée dans le support.

On peut également envisager un dispositif analogue, fonctionnant avec une système de détection magnétique au lieu d'un système de détection optique.

Dans les exemples mentionnés ci-dessus, le capteur est monté sur la bague extérieure du roulement.

On pourrait, sans sortir du cadre de l'invention, avoir un roulement instrumenté dans lequel la bague fixe serait la bague intérieure et la bague tournante serait la bague extérieure.

On pourrait également remplacer le support annulaire de codeur par une extension axiale de la bague tournante du roulement.

Selon l'invention, ni le pion 32, ni l'ergot 36, ni plus généralement le moyen d'immobilisation angulaire de la partie non tournante du dispositif n'interdit la mobilité axiale en translation du palier à roulement par rapport au support, autorisant ainsi l'utilisation d'un roulement instrumenté là où les dispositifs de roulements instrumentés de l'art antérieur ne le permettaient pas.

## Revendications

1. Dispositif de palier à roulement instrumenté (1), du type comprenant une bague extérieure (7), une bague intérieure (9), au moins une rangée d'éléments roulants (11) disposés entre un chemin de roulement de la bague extérieure et un chemin de roulement de la bague intérieure, et un ensemble de détection (15) des paramètres de rotation comprenant un bloc capteur (20) non tournant solidaire de la bague intérieure ou de la bague extérieure et un organe codeur (16) tournant, **caractérisé par le fait qu'**il comprend des premiers moyens (30, 37) appartenant à l'ensemble de détection et des moyens complémentaires (32, 36) aux premiers moyens adaptés pour être montés sur un support, les premiers moyens et les moyens complémentaires étant adaptés à coopérer entre eux pour à la fois immobiliser angulairement une partie non tournante du dispositif sur le support et autoriser un déplacement axial relatif du dispositif par rapport au support, après montage définitif de la partie non tournante sur ledit support, ladite partie non tournante comprenant au moins une des bagues et le bloc capteur.

2. Dispositif selon la revendication 1, **caractérisé en ce que** les moyens d'immobilisation constituent également des moyens d'indexation angulaire du bloc capteur par rapport au support.

3. Dispositif selon la revendication 1 ou 2, **caractérisé par le fait que** le bloc capteur (20) comprend les premiers moyens d'immobilisation angulaire (30, 37).

4. Dispositif selon l'une quelconque des revendications précédentes, **caractérisé par le fait que** le bloc capteur (20) comprend au moins une surface extérieure cylindrique (20a) sur laquelle sont prévus les premiers moyens d'immobilisation angulaire (30).

5. Dispositif selon la revendication 4, **caractérisé par le fait que** les premiers moyens d'immobilisation angulaire comprennent une protubérance (28) en saillie radiale par rapport à la surface extérieure cylindrique (20a).

6. Dispositif selon la revendication 5, **caractérisé par le fait que** les premiers moyens d'immobilisation angulaire comprennent une encoche (30) formée entre deux protubérances (28, 29) en saillie radiale par rapport à la surface extérieure cylindrique (20a), ladite encoche s'étendant axialement.

7. Dispositif selon l'une quelconque des revendications 1 à 3, **caractérisé par le fait que** les premiers moyens d'immobilisation angulaire comprennent une protubérance en saillie axiale par rapport au bloc capteur (20).

8. Dispositif selon l'une quelconque des revendications 1 à 3, **caractérisé par le fait que** les premiers moyens d'immobilisation angulaire comprennent une rainure (37) formée en creux dans la surface extérieure cylindrique (35), ladite rainure s'étendant axialement.

9. Dispositif selon l'une quelconque des revendications précédentes, **caractérisé par le fait que** l'organe codeur (16) est de type optique.

10. Dispositif selon l'une quelconque des revendications 1 à 8, **caractérisé par le fait que** l'organe codeur (16) est de type magnétique.

11. Utilisation d'un dispositif selon l'une quelconque des revendications précédentes, **caractérisée par le fait que** la partie non tournante du dispositif est montée sur le support (4) pourvu des moyens complémentaires (32,36) aux premiers moyens d'immobilisation angulaire (30, 37), de façon que la partie non tournante soit solidaire .angulairement du support (4) et libre de se déplacer axialement par rapport audit support.

12. Utilisation selon la revendication 11, **caractérisée par le fait que** lesdits moyens complémentaires comprennent un pion axial (32) ou un doigt radial (36).

13. Utilisation selon la revendication 11, **caractérisée par le fait que** lesdits moyens complémentaires comprennent un trou formé dans le support.

14. Utilisation selon la revendication 11, **caractérisée par le fait que** lesdits moyens complémentaires comprennent une rainure axiale aménagée sur le support.

## Patentansprüche

1. Instrumentierte Wälzlagervorrichtung (1) mit einem Außenring (7), einem Innenring (9), wenigstens einer Reihe von Wälzkörpern (11), die zwischen einer Laufbahn des Außenrings und einer Laufbahn des Innenrings angeordnet sind, und einer Einrichtung (15) zur Erfassung von Rotationsparametern, die eine nicht umlaufende Signalaufnehmerbaugruppe (20), die mit dem Innenring oder mit dem Außenring fest verbunden ist, sowie ein umlaufendes Signalgebermittel (16) aufweist, **dadurch gekennzeichnet, dass** sie der Erfassungseinrichtung zugehörige erste Mittel (30, 37) und zu den ersten Mitteln komplementäre Mittel (32, 36) aufweist, die passend gestaltet sind, um an dem Träger montiert zu werden, wobei die ersten Mittel und die komplementären Mittel derart aneinander angepasst sind, um miteinander zusammenzuwirken, um zugleich einen nicht umlaufenden Teil der Vorrichtung an dem Träger drehfest zu haltern und nach der endgültigen Montage des nicht umlaufenden Teils an dem Träger eine relative Axialverschiebung der Vorrichtung in Bezug auf den Träger zuzulassen, wobei der nicht umlaufende Teil wenigstens einen der Ringe und die Signalaufnehmerbaugruppe umfasst.

2. Vorrichtung nach Anspruch 1, **dadurch gekennzeichnet, dass** die Mittel zur drehfesten Halterung gleichfalls Indexmittel zur Festlegung der Winkelstellung der Signalaufnehmerbaugruppe in Bezug auf den Träger bilden.

3. Vorrichtung nach Anspruch 1 oder 2, **dadurch gekennzeichnet, dass** die Signalaufnehmerbaugruppe (20) die ersten Mittel zur drehfesten Halterung (30, 37) aufweist.

4. Vorrichtung nach einem der vorhergehenden Ansprüche, **dadurch gekennzeichnet, dass** die Signalaufnehmerbaugruppe wenigstens eine zylindrische Außenfläche (20a) aufweist, auf der die ersten Mittel zur drehfesten Halterung (30) vorgesehen sind.

5. Vorrichtung nach Anspruch 4, **dadurch gekennzeichnet, dass** die ersten Mittel zur drehfesten Halterung einen Vorsprung (28) enthalten, der in Bezug auf die zylindrische Außenfläche (20a) radial vorragt.

6. Vorrichtung nach Anspruch 5, **dadurch gekennzeichnet, dass** die ersten Mittel zur drehfesten Halterung eine Kerbe (30) aufweisen, die zwischen zwei Vorsprüngen (28, 26) ausgebildet ist, die in Bezug auf die zylindrische Außenfläche (20a) radial vorragen, wobei sich die Kerbe in Axialrichtung erstreckt.

7. Vorrichtung nach einem der Ansprüche 1 bis 3, **dadurch gekennzeichnet, dass** die ersten Mittel zur drehfesten Halterung einen Vorsprung aufweisen, der in Bezug auf die Signalaufnehmerbaugruppe (20) axial vorragt.

8. Vorrichtung nach einem der Ansprüche 1 bis 3, **dadurch gekennzeichnet, dass** die ersten Mittel zur drehfesten Halterung eine Nut (37) aufweisen, die in der zylindrischen Außenfläche (35) versenkt ausgebildet ist, wobei sich die Nut in Axialrichtung erstreckt.

9. Vorrichtung nach einem der vorhergehenden Ansprüche, **dadurch gekennzeichnet, dass** das Signalgebermittel (16) ein optischer Signalgeber ist.

10. Vorrichtung nach einem der Ansprüche 1 bis 8, **dadurch gekennzeichnet, dass** das Signalgebermittel (16) ein magnetischer Signalgeber ist.

11. Verwendung einer Vorrichtung gemäß einem der vorhergehenden Ansprüche, **dadurch gekennzeichnet, dass** der nicht umlaufende Teil der Vorrichtung an dem Träger (4) montiert ist, der mit zu den ersten Mitteln zur drehfesten Halterung (30, 37) komplementären Mitteln (32, 36) versehen ist, in der Weise, dass der nicht umlaufende Teil in Umfangsrichtung mit dem Träger (4) drehfest verbunden ist, während er sich in Axialrichtung in Bezug auf den Träger verschieben lässt.

12. Verwendung nach Anspruch 11, **dadurch gekennzeichnet, dass** die komplementären Mittel einen axialen Zapfen (32) oder einen radialen Stift (36) enthalten.

13. Verwendung nach Anspruch 11, **dadurch gekennzeichnet, dass** die komplementären Mittel ein in dem Träger ausgebildetes Loch aufweisen.

14. Verwendung nach Anspruch 11, **dadurch gekennzeichnet, dass** die komplementären Mittel eine in dem Träger eingerichtete axiale Nut aufweisen.

## Claims

1. Instrumented rolling bearing device (1) of the type comprising an outer ring (7), an inner ring (9), at least one row of rolling bodies (11) arranged between a raceway of the outer ring and a raceway of the inner ring, and an assembly (15) for detecting rotation parameters, this assembly comprising a non-rotating sensor unit (20) solid with the inner ring or the outer ring and a rotating encoder member (16), the device being **characterized in that** it comprises first means (30, 37) belonging to the detection assembly and means (32, 36) complementing the first means adapted to be mounted on a support, the first means and the complementing means being adapted to collaborate with one another, for both angularly immobilizing a non-rotating part of the device on the support and allowing relative axial movement of the device with respect to the support once the non-rotating part has been definitively mounted on the said support, the said non-rotating part comprising at least one of the rings and the sensor unit.

2. Device according to Claim 1, **characterized in that** the immobilizing means also constitute means for angularly indexing the sensor unit with respect to the support.

3. Device according to Claim 1 or 2, **characterized in that** the sensor unit (20) comprises the first angular-immobilization means (30, 37).

4. Device according to any one of the preceding claims, **characterized in that** the sensor unit (20) comprises at least one cylindrical outer surface (20a) on which the first angular-immobilization means (30) are provided.

5. Device according to Claim 4, **characterized in that** the first angular-immobilization means comprise a projection (28) protruding radially from the cylindrical outer surface (20a).

6. Device according to Claim 5, **characterized in that** the first angular-immobilization means comprise a recess (30) formed between two projections (28, 29) protruding radially from the cylindrical outer surface (20a), the said recess running axially.

7. Device according to any one of Claims 1 to 3, **characterized in that** the first angular-immobilization means comprise a projection protruding axially from the sensor unit (20).

8. Device according to any one of Claims 1 to 3, **characterized in that** the first angular-immobilization means comprise a groove (37) set into the cylindrical outer surface (35), the said groove running axially.

9. Device according 'to any one of the preceding claims, **characterized in that** the encoder member (16) is of the optical type.

10. Device according to any one of Claims 1 to 8, **characterized in that** the encoder member (16) is of the magnetic type.

11. Use of a device according to any one of the preceding claims, **characterized in that** the non-rotating part of the device is mounted on the support (4) provided with means (32, 36) that complement the first angular-immobilization means (30, 37) so that the non-rotating part is angularly solid with the support (4) and free to move axially with respect to the said support.

12. Use according to Claim 11, **characterized in that** the said complementing means comprise an axial peg (32) or a radial finger (36).

13. Use according to Claim 11, **characterized in that** the said complementing means comprise a hole formed in the support.

14. Use according to Claim 11, **characterized in that** the said complementing means comprise an axial groove formed in the support.
